## Europäisches Patentamt

## European Patent Office

## Office européen des brevets

(11) Veröffentlichungsnummer: **0 254 912**
**A2**

(12) **EUROPÄISCHE PATENTANMELDUNG**

(21) Anmeldenummer: 87109697.0

(22) Anmeldetag: 06.07.87

(51) Int. Cl.⁴ **B29C 55/06 , B29C 47/00**

(30) Priorität: 18.07.86 DE 3624303

(43) Veröffentlichungstag der Anmeldung:
03.02.88 Patentblatt 88/05

(84) Benannte Vertragsstaaten:
BE CH DE FR GB IT LI NL SE

(71) Anmelder: Wolff Walsrode Aktiengesellschaft
Postfach
D-3030 Walsrode 1(DE)

(72) Erfinder: Ermert, Wolfgang, Dr.
Am Hang 24
D-3032 Fallingbostel(DE)

(74) Vertreter: Zobel, Manfred, Dr. et al
c/o BAYER AG Konzernverwaltung RP
Patentabteilung Bayerwerk
D-5090 Leverkusen(DE)

(54) Verfahren zur Herstellung von elastischen Bändern aus Polyurethan.

(57) Verfahren zur Herstellung von elastischen Bändern aus thermoplastischen Polyurethanelastomeren, indem man den Thermoplasten zu einer Flach-oder Schlauchfolie extrudiert und in üblicher Weise vereinzelt, wobei die extrudierte Folie mindestens im Verhältnis 1:1,5 längsorientiert, gekühlt und bis zu einer Erhöhung des E-Moduls um mindestens 25 %, gemessen nach DIN 53 455, gelagert wird, bevor sie vereinzelt wird, sowie deren Verwendung zur Herstellung von elastischen Abschlüssen.

EP 0 254 912 A2

## Verfahren zur Herstellung von elastischen Bändern aus Polyurethan

Die vorliegende Erfindung betrifft Verfahren zur Herstellung von elastischen Bändern aus Polyurethanen, indem man thermoplastische Polyurethanelastomere zu Folien extrudiert, längs reckt und vor dem Vereinzeln bis zu einer Erhöhung des E-Moduls um mindestens 25 %, gemessen nach DIN 53 455, lagert sowie deren Verwendung zur Herstellung von elastischen Abschlüssen.

Es ist bereits bekannt (US-PS 4 300 967), elastische Bänder aus Polyurethanen zur Herstellung von elastischen Abschlüssen wie z.B. elastischen Beinabschlüssen von Höschenwindeln zu verwenden. Dabei traten immer wieder Schwierigkeiten auf, da die gedehnten Polyurethanbänder beim Kontakt mit dem Heißschmelzkleber in aller Regel Temperaturen von 120 bis 130°C ausgesetzt werden und dabei ihre Elastizität einbüßen, d.h. die Bänder büßen bei höheren Temperaturen ihre Rückstellfähigkeit ein und bleiben im Umfang der Dehnung dauerhaft gelängt. Diese thermische Schädigung ist umso größer, je dünner und -schmaler die zum Einsatz kommenden Polyurethanbänder sind. Versuche diesen schädigenden Einfluß der Temperatur durch Auftrag des Schmelzklebers nur in den Randbereichen der Polyurethanbänder und/oder nur sehr dünn aufzutragen hat bei breiteren Bändern mäßigen Erfolg, bei Bändern mit Breiten <10 mm überhaupt keinen.

Mit dem erfindungsgemäßen Verfahren gelingt es nun, Polyurethanbänder bereitzustellen, die diese Nachteile nicht aufweisen und sich daher besonders für elastische Abschlüsse eignen.

Ein Gegenstand der vorliegenden Erfindung sind daher Verfahren zur Herstellung von elastischen Bändern aus thermoplastischen Polyurethanelastomeren, indem man den Thermoplasten zu einer Flach-oder Schlauchfolie extrudiert und in üblicher Weise vereinzelt, die dadurch gekennzeichnet sind, daß die extrudierte Folie mindestens im Verhältnis 1:1,5, vorzugsweise 1:3, längsorientiert, gekühlt und bis zu einer Erhöhung des E-moduls um mindestens 25%, vorzugsweise um 40 - 75 %, gemessen nach DIN 53 455, gelagert wird, bevor man sie vereinzelt.

Ein weiterer Gegenstand der vorliegenden Erfindung sind Verfahren zur Herstellung von elastischen Abschlüssen mit Hilfe der erfindungsgemäß hergestellten thermoplastischen Bändern, die dadurch gekennzeichnet sind, daß man die Bänder im gedehnten Zustand mit Hilfe von Heißschmelzklebern auf der Unterlage, vorzugsweise einer Polyethylenbahn der Höschenwindel, befestigt und im entspannten Zustand wiederum einer Wärmebehandlung aussetzt.

Nach dieser Wärmebehandlung des entspannten und mit der Unterlage verbundenen Polyurethanbandes stellt man fest, daß es seine, vor dem Verbinden mit der Unterlage noch vorhandene Rückstellfähigkeit wieder aufweist und in seine ursprüngliche Länge zurückkehrt, wodurch die Unterlage gleichmäßig gekräuselt, d.h. ein elastischer Abschluß gebildet wird. Diese gleichmäßige Kräuselung hat außerdem den Vorteil, daß der elastische Abschluß besser abdichtet und daher insbesondere als Beinabschluß für Höschenwindeln geeignet ist.

Zur Herstellung der Polyurethanbändchen eignen sich vorzugsweise Polyurethane mit einem Schmelzindex <100, vorzugsweise im Bereich von 20 bis 30 g pro 10 Minuten (geprüft bei 8,7 kg/190°C). Von diesen Polyurethanen eignen sich insbesondere thermoplastische Polyurethanelastomere, deren Diolkomponente sich vom Polyester oder Polyether ableitet, vorzugsweise von Polyethern, und eine Shore-Härte A im Bereich von 65 bis 90 aufweisen. Solche thermoplastischen Polyurethanelastomere sind bekannte Handelsprodukte.

Die Herstellung der Polyurethanfolien, aus denen dann di Polyurethanbändchen gefertigt werden, kann durch Extrusion zu einer Flachfolie oder zu einem Folienschlauch erfolgen, wobei das Folienblasverfahren bevorzugt wird. Dabei wird nach dem Austritt aus der Extrusionsdüse die Folienbahn durch hohe Abzugskräfte längsorientiert, mindestens im Verhältnis 1:1,5, vorzugsweise im Verhältnis 1:3, rasch, bevorzugt mit Kühlluft, abgekühlt und in üblicher Weise aufgewickelt. Dabei sollte die Aufwicklung mit einer hohen Wickelspannung, bevorzugt den Zugkräften wie bei der Längsorientierung, aufgewickelt werden. Die Folie wird in diesem Zustand gelagert, bis sich in E-Modul gemessen nach DIN 53 455, um mindestens 25 %, vorzugsweise um 40-75 % erhöht hat. Die Folien werden dann in bekannter Weise, wenn noch notwendig, auf Bändchenbreiten, vorzugsweise Breiten von 1 bis 10 mm, vorzugsweise 3 bis 7 mm vereinzelt. Die Folien sollten für die Herstellung von elastischen Abschlüssen eine Dicke von 20 bis 80 $\mu$, vorzugsweise 30 bis 40 $\mu$ aufweisen.

Die so hergestellten Polyurethanbändchen werden vor ihrem Auftrag auf die Unterlage, vorzugsweise eine Bahn aus Kunststoff, wie einer Polyethylenbahn für Höschenwindeln, um mindestens 50 %, vorzugsweise um mindestens 100 % ihrer ungedehnten Länge gedehnt und mit Hilfe von Schmelzklebern vorzugsweise intermettierend mit der Unterlage verbunden. Dabei verliert das Polyurethanbändchen durch den Kontakt mit dem Heißschmelzkleber, d.h. durch die Wärmeeinwirkung, seine Rückstellkraft zu einem hohen Ausmaß und verbleibt auch im entspannten Zustand in der durch die Dehnung erzielten Verlängerung. Erst wenn man auf das abgekühlte Polyurethanbändchen wieder Wärme einwirken läßt, so kann man in Abhängigkeit von der Wärmeeinwirkung nicht nur die ursprüngliche ungedehnte Länge, sondern gegebenenfalls noch eine Verkürzung dieser Länge erreichen. Für jedes Polyurethanmaterial ist dieses Längentemperaturverhältnis durch eine einfache Messung festzustellen, so daß man anhand eines Diagrammes ablesen kann, durch welche Wärmeeinwirkung eine gewünschte Rückstellung und damit Länge des Polyurethanbändchens für einen bestimmten elastischen Abschluß erzielt werden soll.

Dabei zeigt sich überraschenderweise, daß nur die erfindungsgemäß hergestellten Polyurethanfolien bzw. -bänder diese Wirkung aufweisen, während herkömmlich hergestellte Bändchen, deren Basisfolienmaterial nicht die erfindungsgemäßen Verfahrensschritte durchlaufen hat, in weit geringerem Ausmaß bei entsprechender Wärmebehandlung im gelängten Zustand ihre Rückstellungskraft wiedergewinnen und im gelängten Zustand verbleiben.

## Beispiel

a) Eine Folie aus Polyesterpolyurethan mit einem Schmelzindex von 25 bis 28 g/10 min. (geprüft bei 8,7 kg/190°C) wird nach dem Folienblasverfahren in einer Stärke von 40 μ hergestellt, wobei ein Abzugsverhältnis von 1:3 in Längsrichtung eingehalten, eine rasche Kühlluftzufuhr und eine maximal mögliche hohe Wickelspannung eingehalten wird. Nach einer Lagerung von ca. 48 Stunden, wobei sich der E-Modul von anfänglich 4,5 N/mm² auf 7,5 N/mm², gemessen nach DIN 53 455, erhöht, wird die Folie auf eine Breite von 6 mm vereinzelt

b) die unter A hergestellten und um 100 % gedehnten Polyurethanbändchen werden mittels eines hot-melt-Klebers der zweispurig vorher auf das Bändchen aufgebracht worden ist, mit einer Polyethylenbahn verbunden. Nach dem Abkühlen wird das auf der Unterlage entspannte und fixierte Bändchen einer neuerlichen Wärmebehandlung unterworfen. Je nachdem, ob die neuerliche Wärmebehandlung bei 60°C, 90°C order 100°C durchgeführt wird, stellt sich das gedehnte Polyurethanbändchen bis auf 18 % bzw. 12 %, bzw. 5 % der ursprünglichen Länge zurück. Dies bedeutet, daß durch die neuerliche Erwärmung eine Rückstellung um 82, 88 bzw. 95 % erreicht werden kann, während ein Bändchen, das in einem auf 100 % gedehnten Zustand auf die Polyurethanunterlage aufgebracht worden ist und keiner neuerlichen Wärmebehandlung unterworfen wurde, eine Zunahme der ursprünglichen Länge um 80 % zeigt, das heißt, nach dem Abkühlen und Entspannen nur eine Rückstellung um 20 % erfolgt.

## Ansprüche

1. Verfahren zur Herstellung von elastischen Bändern aus thermoplastischen Polyurethanelastomeren, indem man den Thermoplasten zu einer Flach-oder Schlauchfolie extrudiert und in üblicher Weise vereinzelt, dadurch gekennzeichnet, daß die extrudierte Folie mindestens im Verhältnis 1:1,5 längsorientiert, gekühlt und bis zu einer Erhöhung des E-Moduls um mindestens 25 %, gemessen nach DIN 53 455, gelagert wird, bevor sie vereinzelt wird.

2. Verfahren nach Anspruch 1, dadurch gekennzeichnet, daß als thermoplastische Polyurethanelastomere Polyurethanpolyetherelastomere eingesetzt werden.

3. Verfahren nach Anspruch 1 oder 2, dadurch gekennzeichnet, daß das thermoplastische Material zu einer Schlauchfolie extrudiert, gekühlt und unter hoher Wickelspannung gelagert wird.

4. Verfahren zur Herstellung von elastischen Abschlüssen mit Hilfe von elastischen Bändern, hergestellt gemäß Ansprüchen 1 bis 3, dadurch gekennzeichnet, daß man die elastischen Bänder im gedehnten Zustand mit Hilfe von Heißschmelzklebern mit der Unterlage gegebenenfalls intermedierend verbindet und im entspannten, abgekühlten Zustand noch einmal einer Wärmebehandlung unterwirft.

5. Verfahren nach Anspruch 4, dadurch gekennzeichnet, daß die Wärmebehandlung bei einer Temperatur von mindestens 60° erfolgt.